(19)

Europäisches
Patentamt

European
Patent Office

Office européen
des brevets

(11) **EP 2 160 778 B1**

(12) **EUROPEAN PATENT SPECIFICATION**

(45) Date of publication and mention
of the grant of the patent:
**30.05.2012 Bulletin 2012/22**

(51) Int Cl.:
*H01M 6/22* *(2006.01)*   *H01M 10/34* *(2006.01)*

(21) Application number: **08768340.5**

(86) International application number:
**PCT/US2008/007283**

(22) Date of filing: **11.06.2008**

(87) International publication number:
**WO 2008/154022 (18.12.2008 Gazette 2008/51)**

(54) **BATTERIES WITH PERMANENTLY WET-ABLE FINE FIBER SEPARATORS**

BATTERIEN MIT PERMANENT BEFEUCHTBAREN FEINEN FASERSEPARATOREN

BATTERIES AVEC SÉPARATEURS DE FIBRES FINES MOUILLABLES DE FAÇON PERMANENTE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **11.06.2007 US 811563**

(43) Date of publication of application:
**10.03.2010 Bulletin 2010/10**

(73) Proprietor: **E. I. Du Pont de Nemours and Company
Wilmington, DE 19898 (US)**

(72) Inventors:
• **ARORA, Pankaj
Chesterfield, Virginia 23832 (US)**

• **KIM, Young, H.
Sungnam Si, Kyunggi Do (KR)**
• **FRISK, Simon
Newark, Delaware 19711 (US)**

(74) Representative: **Matthews, Derek Peter
Dehns
St Bride's House
10 Salisbury Square
London
EC4Y 8JD (GB)**

(56) References cited:
**WO-A-2007/041312    US-A- 3 870 567
US-A1- 2005 042 518**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The present invention relates to batteries with permanently wet-able fine fiber separators with surface active agents.

**BACKGROUND OF THE INVENTION**

Polymer fibers have been widely used in the nonwovens industry in the manufacture of nonwoven webs, fabrics, and composites. Olefin polymers, such as polyethylene, polypropylene, polybutene, polypentene, and copolymers of ethylene or propylene with other olefinic monomers, are known for their hydrophobic properties. Thus, nonwoven webs of polyolefin fibers are frequently used in applications where their hydrophobic properties are advantageous. For example, polyolefin nonwovens are often used in diapers, other hygiene products and medical applications where it is desired to keep moisture away from a wearer's skin.

However, there are numerous other nonwoven fabric applications where the hydrophobic nature of polyolefin fibers is not required and where hydrophilic properties are desired. Even a fiber made of a polymer such as a polyamide or polyester may not have the required hydrophilicity for certain applications. If a nonwoven fabric formed of polymer fibers is to be used, the fibers must be treated in some way to alter the normally hydrophobic properties of the fibers to impart hydrophilic properties. One well-known practice involves the topical application of compositions, such as surfactants, to render the fabric more hydrophilic. However, topical chemical applications are not entirely satisfactory for some applications, since they are not durable. The hydrophilic property is lost after washing or after extended use in a battery. The extra processing steps required for topical chemical treatments or other fiber surface modification treatments also undesirably increase the cost of the fabric. The few processes known to render the polymers wet-able are environmentally unfriendly, relatively slow and have limited durability.

For improving wet-ability it is known in the industry that certain surfactants, such as TRITON X-100 from Rohm and Haas, can be applied as an aqueous solution or suspension to the surface of hydrophobic fibers, filaments or nonwoven fabrics with the resulting effect of rendering the fibers, filaments or fabrics wet-able, although not absorbent. These topical treatments can be applied by any means familiar to one skilled in the art, such as foaming spraying, dip- and squeeze or gravure roll. In almost every case, some sort of heating step is required to remove residual water or solvent used to prepare the surfactant solution or suspension. This step adds significantly to the manufacturing costs and complexity. Further, thermoplastics are altered by exposure to heat and careful monitoring of the heating process is required to ensure that fabric properties are not adversely affected. Also, since surfactants are not strongly chemically bonded to the fiber or filament surfaces, such topical treatments are not durable. They tend to wash off during repeated fluid exposures or rub off during use.

In an effort to correct this deficiency, corona discharge treatments have been used to alter the electrochemical potential of the surfaces of fibers or filaments. The effect is to render surfaces more reactive with the result that hydrophobic surfaces become more wet-able. However, these electrical potential changes are also not permanent, being particularly subject to environmental effects, such as storage in moist environments.

An additional alternative is the use of surface chemical treatments where the surfactants are covalently bonded to the polymer.

Another approach is the incorporation of chemical agents in the thermoplastic polymer before it is melt extruded into fibers, filaments or nonwoven fabrics, rendering the fibers themselves hydrophilic. Agents, such as siloxanes, have been proposed for this purpose. Here, the object is to impart a durable change in the wet-ability of the fibers or filaments. The performance model theory states that the melt additives become dispersed in the molten polymer and are bound in the matrix when the polymer cools during fiber or filament quenching. Over time, due to the effects of further processing, the additive rises to the surface of the fibers or filaments, a phenomenon called blooming, imparting durable wet-abilty. Published PCT Patent Specification WO99/00447 discloses a product and process for making wet-able spunbond and melt blown fibers prepared from an olefin polymer, polyester or polyamide including a wetting agent consisting essentially of a monoglyceride or a combination of a monoglyceride and a mixed glyceride with the monoglyceride amounting to at least 85% by weight in the case of the combination.

However, the use of hydrophilic melt additives can add significantly to the cost of the nonwoven webs. Also, the addition of a hydrophilic melt additive to the polymer can alter the properties of the fibers or filaments, resulting in unacceptable changes to important physical or aesthetic properties of the nonwoven web, such as strength, softness or hand, for example.

In alkaline batteries, a separator is used between a positive electrode and a negative electrode to keep them separated and to prevent a short circuit therebetween, and further, to hold an electrolyte thereon and enable a smooth electromotive reaction.

Battery separators for alkaline batteries are conventionally either thick, multi-layered nonwovens having large pores that have good (low) ionic resistance but relatively poor barrier to growing dendrites (also referred to herein as "dendritic barrier"), or multi-layered nonwovens with microporous membranes thereon having very small pores that have good dendritic barrier but very high ionic resistance.

The space allotted for the battery has been becoming smaller in electronic equipment, due to the need for miniaturization and weight-saving. Nevertheless, the performance requirement for such a smaller battery is the same as or higher than that for a conventional battery, and therefore, it is necessary to enhance the capacity of the battery, and to increase the amounts of active materials in the electrodes. Thus, it would be advantageous if the volume allotted in the battery for the separator could be reduced, and the separator made thinner. However, if a conventional separator is simply made thinner, its capacity for holding electrolyte (i.e., the electrolyte-holding capacity) is reduced. Thinner nonwovens with large fibers results in large effective pore size of the separator and poor barrier properties. In addition, in these thinner nonwovens, the uniformity of the fiber distribution may be reduced, further increasing the effective pore size.

U.S. patent 7,112,389 is describes the use of nanowebs as separators in batteries. The use of nanowebs yields superior performance by giving a better balance between the ionic resistance and barrier properties. Because the fiber size is drastically reduced, as compared to conventional battery separator materials, a very small pore size can be achieved with very thin separator materials. The nanowebs are coated with surfactants to improve the wet-ability, wicking, and electrolyte absorption in 35% KOH.

There remains a need for thin separators with permanent wet-ability for use in batteries which also exhibit good wicking and electrolyte absorption properties.

## SUMMARY OF THE INVENTION

The present invention is directed to an alkaline battery according to claim 1 having a separator comprising a porous fine fiber layer of wet-able polymeric fibers having a mean diameter in the range from about 50 nm to about 3000 nm, wherein the porous fine fiber layer permanently wets with strong alkaline electrolytes.

## DETAILED DESCRIPTION OF THE INVENTION

It would be desirable to have alkaline batteries with thin separators having an improved balance of dendritic barrier and ionic resistance, as well as permanent wet-ability in 35% KOH electrolyte, which also have good wicking and electrolyte absorption properties.

The alkaline batteries of the present invention include battery separators having an improved combination of reduced thickness, reduced ionic resistance and good dendritic barrier properties, providing a high resistance to short-circuiting. The separators useful in the batteries of the invention have a high capacity to absorb electrolyte while maintaining excellent structural integrity and chemical and dimensional stability in use, such that the separators do not lose their dendritic barrier properties even when saturated with electrolyte solution. The reduction in thickness enables the manufacture of batteries having increased capacity. The separators useful in the batteries of the invention have low ionic resistance, therefore ions flow easily between the anode and the cathode. The separators wet instantly with alkaline electrolytes and stay wet during extended use in the battery.

The specific polymer compositions of the present invention, when spun into fine fiber layers, have superior wetting properties in strong alkaline solutions and also exhibit good wicking and electrolyte absorption properties with thinner separators.

By "wet-able fiber" is meant that the polymeric fibers of the battery separator of the invention comprise surfactant molecules embedded within the polymer and extending to the fiber surfaces.

In one embodiment of the invention an effective amount of surfactant is added to the fiber spinning solution to form polymeric fibers comprising a composition of polymer and surfactant which is wet-able. An "effective amount" of surfactant is to be understood to mean at least an amount that produces wet-ability in the electrolyte of choice. This procedure results in a good distribution and entrapment of the surfactant molecules in the fibers and on the fiber surface. In turn, this minimizes both the risk of surfactant molecules being stripped from the surface of the fibers during handling of the material and the risk of surfactant molecules leaching into the electrolyte in the end use.

In one embodiment of the invention, an effective amount of surfactant is added to the fiber spinning solution to form polymeric fibers comprising a composition of polymer and surfactant which makes the fibers, which are inherently hydrophobic, hydrophilic. The fibers can then be further coated with water-based surfactant solutions after spinning, instead of having to be coated with a non-aqueous surfactant solution. The polymer can be coated with surfactant from aqueous solutions and the separator will be wet-able in the electrolyte of choice when it is dry.

Suitable surfactants of the invention are preferably nonionic surfactants, such as alkylated polyether surfactant (e.g. Tergitol or Triton from Dow Chemical) or siloxyl polyether surfactant (e.g. Silwet from GE), but not limited to them.

The surfactant amount can vary from 0.4 wt% to 20 wt% (weight % relative to the polymer), preferably between 1 wt% and 5 wt%.

One embodiment of the invention relates to an alkaline battery. The battery can be an alkaline primary battery, e.g., Zinc-Manganese Oxide or Zn--MnO$_2$ battery in which the anode is zinc and the cathode is manganese oxide (MnO$_2$), or Zinc-Air battery in which the anode is zinc and the cathode is air, or it can be an alkaline secondary battery, e.g., a Nickel Cadmium battery in which the anode is cadmium and the cathode is Nickel oxy-hydroxide (NiOOH), Nickel Zinc or Ni--Zn battery in which the anode is zinc and the cathode is NiOOH, Nickel Metal Hydride (NiMH) battery in which the anode is metal hydride (e.g. LaNi$_5$) and the cathode is NiOOH or Nickel-Hydrogen or NiH$_2$ battery in which the anode is hydrogen (H$_2$) and the cathode is NiOOH. Other types of alkaline batteries include Zinc/Mercuric Oxide in which the anode is zinc, and the cathode is mercury oxide (HgO), Cadmium/Mercuric Oxide in which the anode is cadmium and the cathode is mercury oxide, Zinc/Silver Oxide in which the anode is zinc and the cathode is silver oxide (AgO), Cadmium/ Silver Oxide in which the anode is cadmium and the cathode is silver oxide. All of these battery types use 30-40% potassium hydroxide as the electrolyte.

The battery of the present invention includes a separator having at least one porous layer of wet-able fine polymeric fibers having a mean diameter in the range of between about 50 nm and about 3000 nm, even between about 50 nm and about 1000 nm, and even between about 50 nm and about 500 nm. Fine fibers in these ranges provide a separator structure with high surface area which results in good electrolyte absorption and retention due to increased electrolyte contact. The separator has a mean flow pore size of between about 0.01 μm and about 15 μm, even between about 0.01 μm and about 5 μm, and even between about 0.01 μm and about 1 μm. The separator has a porosity of between about 20% and about 90%, even between about 40% and about 70%. The high porosity of the separator also provides for good electrolyte absorption and retention in the battery of the invention.

A separator useful in the battery of the invention has a thickness of between about 0.1 mils (0.0025 mm) and about 12 mils (0.3 mm), even between about 0.5 mils (0.0127 mm) and about 5 mils (0.127 mm). The separator is thick enough to prevent dendrite-induced shorting between positive and negative electrode while allowing good flow of ions between the cathode and the anode. The thin separators create more space for the electrodes inside a cell and thus provide for improved performance and life of the batteries of the invention.

The separator has a basis weight of between about 1 g/m$^2$ and about 90 g/m$^2$, preferably between about 5 g/m$^2$ and about 30 g/m$^2$. If the basis weight of the separator is too high, i.e., above about 90 g/m$^2$, then the ionic resistance may be too high. If the basis weight is too low, i.e., below about 1 g/m$^2$, then the separator may not be able to reduce dendrite shorting between the positive and negative electrode.

The separator has a Frazier air permeability of less than about 150 cfm/ft$^2$ (46 m$^3$/min/m$^2$), even less than about 25 cfm/ft$^2$ (8 m$^3$/min/m$^2$), even less than about 5 cfm/ft$^2$ (1.5 m$^3$/min/m$^2$). In general, the higher the Frazier air permeability, the lower the ionic resistance of the separator, therefore a separator having a high Frazier air permeability is desirable.

The separator can comprise multiple porous fine fiber layers which may comprise the same or different polymers. In addition, the multiple layers may have differing characteristics selected form the list consisting of thickness, basis weight, pore size, fiber size, porosity, air permeability, ionic resistance, and tensile strength.

Suitable polymers for use in the alkaline battery separator include aliphatic polyamide, semi-aromatic polyamide, polyvinyl alcohol, cellulose, polyethylene terephthalate, polypropylene terephthalate, polybutylene terephthalate, polysulfone, polyvinylidene fluoride, polyethylene, polypropylene, polymethyl pentene, polyphenylene sulfide, polyacetyl, polyacrylonitrile, polyurethane, aromatic polyamide and blends, mixtures and copolymers thereof. Polymers that are especially suitable for use in the alkaline battery separator include polyvinyl alcohol, cellulose, aliphatic polyamide and polysulfone. In some embodiments of the invention, it may be preferable to crosslink the polymeric fine fibers in order to maintain the porous structure and improve the structural integrity of the separator in the electrolyte. For example, uncross linked polyvinyl alcohol separators can dissolve in water and form a gel type structure having poor structural integrity in strong alkaline electrolytes. Certain polymers, e.g. polyvinyl alcohol (PVA), polyvinylidene fluoride, polyvinylidene fluoride-hexafluoropropylene, polyethylene oxide, polyacrylonitrile, polymethyl methacrylate, tend to swell or gel in the electrolytes, thus closing the pores of the fibrous structure. In certain cases they will also become soft or degrade in the electrolyte leading to poor structural integrity. Depending on the polymer of the battery separator, various cross linking agents and cross linking conditions can be used. All the polymers mentioned above can be cross linked by known means, such as by chemical cross linking, electron beam cross linking or UV cross linking.

One process for making the fine fiber layer(s) of the separator for use in the battery of the invention is an electroblowing process as disclosed in International Publication Number WO2003/080905 (U. S. Ser. No. 10/822,325). Alternatively, the fine fiber layer(s) of the separator can be made by a conventional electrospinning process such as disclosed in U.S. Published Patent Application No. 2004/0060268 A1.

In one embodiment of the invention, the battery separator comprises a single fine fiber layer made by a single pass of a moving collection means through the process, i.e., in a single pass of the moving collection means under the spin pack. Alternatively, the battery separator can comprise multiple fine fiber layers, formed by multiple passes under the spin pack. It will be appreciated that the fibrous web can be formed by one or more spinning beams running simultaneously over the same moving collection means. When the separator comprises multiple layers, the multiple layers can be layers of the same polymeric fine fibers, or can alternatively be layers of differing polymeric fine fibers. The multiple layers can have differing characteristics including, but not limited to, polymer, thickness, basis weight, pore size, fiber size, porosity, air permeability, ionic resistance and tensile strength.

The collected fine fiber layer(s) are advantageously bonded which has been found to improve the tensile strength of the separator. A high level of tensile strength in the machine direction helps during cell winding and also contributes to the good dendritic barrier of the separator in use. Bonding may be accomplished by known methods, including but not limited to thermal calendering between heated smooth nip rolls, ultrasonic bonding, point bonding, and through gas bonding. Bonding increases the strength of the fine fiber layer(s) so that the layer(s) may withstand the forces associated with being handled and being formed into a useful separator, and depending on the bonding method used, adjusts physical properties such as thickness, density, and the size and shape of the pores.

TEST METHODS

Basis Weight was determined by ASTM D-3776, which is hereby incorporated by reference and reported in $g/m^2$.

Porosity was calculated by dividing the basis weight of the sample in $g/m^2$ by the polymer density in $g/cm^3$ and by the sample thickness in micrometers, multiplying by 100 and subsequently subtracting from 100%, i.e., percent porosity=100-basis weight/(densityxthickness)$\times$100.

Fiber Diameter was determined as follows. Ten scanning electron microscope (SEM) images at 5,000X magnification were taken of each fine fiber layer sample. The diameter of eleven (11) clearly distinguishable fine fibers were measured from the photographs and recorded. Defects were not included (i.e., lumps of fine fibers, polymer drops, intersections of fine fibers). The average (mean) fiber diameter for each sample was calculated.

Thickness was determined by ASTM D1777, which is hereby incorporated by reference, and is reported in mils and converted to micrometers.

Frazier Air Permeability is a measure of air permeability of porous materials and is reported in units of $ft^3/min/ft^2$. It measures the volume of air flow through a material at a differential pressure of 0.5 inches (12.7 mm) of the water. An orifice is mounted in a vacuum system to restrict flow of air through sample to a measurable amount. The size of the orifice depends on the porosity of the material. Frazier permeability is measured in units of $ft^3/min/ft^2$ using a Sherman W. Frazier Co. dual manometer with calibrated orifice.

Mean Flow Pore Size was measured according to ASTM Designation E 1294-89, "Standard Test Method for Pore Size Characteristics of Membrane Filters Using Automated Liquid Porosimeter" which approximately measures pore size characteristics of membranes with a pore size diameter of 0.05 $\mu$m to 300 $\mu$m by using automated bubble point method from ASTM Designation F 316 using a capillary flow porosimeter (model number CFP-34RTF8A-3-6-L4, Porous Materials, Inc. (PMI), Ithaca, N.Y.). Individual samples (8, 20 or 30 mm diameter) were wetted with low surface tension fluid (1,1,2,3,3,3-hexafluoropropene, or "Galwick," having a surface tension of 16 dyne/cm). Each sample was placed in a holder, and a differential pressure of air was applied and the fluid removed from the sample. The differential pressure at which wet flow is equal to one-half the dry flow (flow without wetting solvent) is used to calculate the mean flow pore size using supplied software.

Wetting time (seconds) is measured by dispensing 1 $\mu$l of fluid (water or 20% KOH solution) onto the sample surface and timing how long it takes to soak into the sample. The fluid is dispensed by an automatic syringe that delivers the same amount each time. The wetting time is reported in seconds.

Electrolyte Absorption is measured by soaking 10 cm x 10 cm samples in 35% KOH for 10 minutes. The weight of the samples is measured before and after soaking in 35% KOH and electrolyte absorption is calculated with the formula:

$$\%Elec.Abs. = \frac{\left(W_f - W_i\right)}{W_i} \times 100$$

Where $W_f$ and $W_i$ are final weight and initial weight of the sample in grams.

Contact angle is measured with a VCA2500xe (VCA=Video Contact Angle) made by Advanced Surface Technologies (Billerica, MA). The fluid is dispensed by an automatic syringe that delivers the same amount each time. The camera takes the picture and the software measures the contact angle from the picture. The contact angle is reported in degrees.

**EXAMPLES**

Siloxyl polyether surfactant (Silwet, GE Silicones, Evansville, IN) was added to a spinning solution of DuPont Nylon 66-FE 3218 polymer in formic acid. Webs were electroblown using the procedure given in publication WO 03/080905 and produced the web properties listed in Table 1 (individual examples + control).

**TABLE 1**

| Surfactant Loading in Fibers (wt %) | Basis Weight (g/m$^2$) | Mean Fiber Diameter (nm) | Web Thickness (mm) | Air Permeability (cfm/ft$^2$) | m$^3$/min/m$^2$ |
|---|---|---|---|---|---|
| 0.0 | 30.0 | 360 | 0.152 | (6.02) | 1.806 |
| 0.42 | 29.5 | 446 | 0.162 | (5.52) | 1.656 |
| 0.83 | 28.9 | 453 | 0.162 | (5.56) | 1.668 |
| 1.25 | 30.7 | 447 | 0.165 | (5.7) | 1.71 |

Table 2 shows the wetting behavior of the nanoweb samples containing 0 wt%, 0.42 wt%, 0.83 wt% and 1.25 wt% Silwet, respectively. The wetting speed was measured in water and 20% KOH. Two measurements were done for each sample and both measurements are reported in Table 2, separated by commas. The results clearly show that the samples with surfactant wet faster then the ones without any surfactant. In this case 0.83 wt% or above of Silwet in the fibers was shown to be an effective amount.

Table 2 also shows the percentage electrolyte absorption of the nanoweb samples containing 0 wt%, 0.42 wt%, 0.83 wt%, and 1.25 wt% Silwet, respectively. The electrolyte absorption was measured in 35% KOH. The electrolyte absorption by nanowebs was significantly higher for samples with surfactant. In this case 0.83 wt% or above of Silwet in the fibers was shown to be an effective amount.

**TABLE 2**

| Surfactant Loading in Fibers (wt %) | Electrolyte absorption (%) | Wetting time of Water (Seconds) | Wetting Time 20% KOH (Seconds) |
|---|---|---|---|
| 0.0 | 274 | 4, 5 | Not wetting |
| 0.42 | 285 | 1, 1 | 7, 11 |
| 0.83 | 572 | < 1, < 1 | 3, 4 |
| 1.25 | 458 | Instant | < 1, < 1 |

Table 3 shows the contact angle of the nanoweb samples containing 0, 0.42, 0.83, and 1.25 wt% Silwet, respectively. The contact angle was measured with water and 20% KOH, respectively. Higher contact angle means poor wet-ability of nanowebs in that particular solvent. Samples with higher level of surfactants showed lower contact angles. The wetting was very fast ("instant") for samples with greater then 0.83 wt% surfactant and thus was not possible to get a read on contact angle. The data clearly shows that the wetting properties of samples with surfactant (> 0.83 wt%) was very good.

**TABLE 3**

| Surfactant Loading in Fibers (wt %) | Contact Angle Water (degrees) | Contact Angle 20% KOH (degrees) |
|---|---|---|
| 0.0 | 124, 134 | 134, 138 |
| 0.42 | Instant | 132, 134 |
| 0.83 | Instant | Instant |
| 1.25 | Instant | Instant |

**Claims**

1. An alkaline battery having a separator comprising a porous fine fiber layer of wet-able polymeric fibers having a mean diameter in the range from 50 nm to 3000 nm and obtainable by electrospinning or electro blowing a spinning solution of polymer and surfactant, wherein the surfactant is a nonionic surfactant, wherein the porous fine fiber layer permanently wets with strong alkaline electrolytes, wherein the nonionic surfactant is selected from the group consisting of an alkylated polyether surfactant and a siloxyl polyether surfactant, wherein the fibers comprise a polymer selected from the group consisting of aliphatic polyamide, semi-aromatic polyamide, polyvinyl alcohol, cellulose, polyethylene terephthalate, polypropylene terephthalate, polybutylene terephthalate, polysulfone, polyvinylidene fluoride, polyvinylidene fluoride-hexafluoropropene, polyacrylonitrile, polypropylene, polyethylene, polymethyl methacrylate, polymethyl pentane, polyphenylene sulfide, polyacetyl, polyurethane, aromatic polyamide and blends, mixtures and copolymers thereof, and wherein the nonionic surfactant is present at a level of 0.4% to 20% by weight of the polymer.

2. The battery of claim 1 wherein the surfactant is present at a level of 1 % to 5% by weight of the polymer.

3. The battery of claim 1 wherein the porous fine fiber layer has a mean flow pore size of between 0.01 $\mu$m and 15 $\mu$m.

4. The battery of claim 1 wherein the porous fine fiber layer has a thickness of between 0.1 mil (0,0025 mm) and 12 mil (0.3 mm).

5. The battery of claim 1 wherein the porous fine fiber layer has a basis weight of between 1g/m$^2$ and 90 g/m$^2$.

6. The battery of claim 1 wherein the fibers have a mean diameter between 50 nm and 1000 nm.

7. The battery of claim 1 wherein the polymer is cross linked.

8. The battery of claim 1 wherein the separator comprises multiple porous fine fiber layers, or
wherein the separator comprises multiple porous fine fiber layers comprising differing polymers, or
wherein the separator comprises multiple porous fine fiber layers having differing characteristics selected from the list consisting of thickness, basis weight, pore size, fiber size, porosity, air permeability, ionic resistance and tensile strength.

9. The alkaline battery of claim 1 wherein the alkaline battery is a Zn-MnO$_2$ primary, Zn-MnO$_2$ secondary, Zn-Air, Zn-AgO, Ni-Zn, Cd-AgO, Zn-HgO, Cd-HgO Ni-Cd, Ni-Metal Hydride, or Ni-H$_2$ battery.

10. The alkaline battery of claim 1, wherein the polymeric fibers are further coated with surfactant.

**Patentansprüche**

1. Alkalibatterie, die eine Separator aufweist, der eine poröse feine Faserschicht aus benetzbaren polymeren Fasern umfasst, die einen mittleren Durchmesser im Bereich von 50 nm bis 3000 mm aufweisen und durch Elektrospinnen oder Elektroblasen einer Spinnlösung von Polymer und Tensid erhältlich sind, wobei das Tensid ein nichtionisches Tensid ist, wobei die poröse feine Faserschicht ständig mit starken alkalischen Elektrolyten benetzt wird, wobei das nichtionische Tensid aus der Gruppe ausgewählt ist bestehend aus einem alkylierten Polyethertensid und einem Siloxylpolyethertensid, wobei die Fasern ein Polymer umfassen ausgewählt aus der Gruppe bestehend aus aliphatischem Polyamid, halbaromatischem Polyamid, Polyvinylalkohol, Cellulose, Polyethylenterephthalat, Polypropylenterephthalat, Polybutylenterephthalat, Polyfulfon, Polyvinylidenfluorid, Polyvinylidenfluoridhexafluorpropen, Polyacrylnitril, Polypropylen, Polyethylen, Polymethylmethacrylat, Polymethylpentan, Polyphenylensulfid, Polyacetyl, Polyurethan, aromatischem Polyamid und Abmischungen, Mischungen und Copolymeren davon und wobei das nichtionische Tensid in einem Niveau von 0,4 Gew.-% bis 20 Gew.-%, auf das Polymer bezogen, vorliegt.

2. Batterie nach Anspruch 1, wobei das Tensid in einem Niveau von 1 Gew.-% bis 5 Gew.-%, auf das Polymer bezogen, vorliegt.

3. Batterie nach Anspruch 1, wobei die poröse feine Faserschicht eine mittlere Strömungsporengröße zwischen 0,01 $\mu$m und 15 $\mu$m aufweist.

**4.** Batterie nach Anspruch 1, wobei die poröse feine Faserschicht eine Dicke zwischen 0,1 mil (0,0025 mm) und 12 mil (0,3 mm) aufweist.

**5.** Batterie nach Anspruch 1, wobei die poröse feine Faserschicht ein Grundgewicht zwischen 1 g/m$^2$ und 90 g/m$^2$ aufweist.

**6.** Batterie nach Anspruch 1, wobei die Fasern einen mittleren Durchmesser zwischen 50 nm und 1000 nm aufweisen.

**7.** Batterie nach Anspruch 1, wobei das Polymer vernetzt ist.

**8.** Batterie nach Anspruch 1, wobei der Separator multiple poröse feine Faserschichten umfasst, oder wobei der Separator multiple poröse feine Faserschichten umfasst, die verschiedene Polymere umfassen, oder wobei der Separator multiple poröse feine Faserschichten umfasst, die verschiedene Charakteristiken aufweisen ausgewählt aus der Liste bestehend aus Dicke, Grundgewicht, Porengröße, Fasergröße, Porosität, Luftdurchlässigkeit, Ionenresistenz und Zugfestigkeit.

**9.** Alkalibatterie nach Anspruch 1, wobei die Alkalibatterie eine Zn-MnO$_2$-Primär-, Zn-MnO$_2$-Sekundär-, Zn-Luft-, Zn-AgO-, Ni-Zn-, Cd-AgO-, Zn-HgO-, Cd-HgO-, Ni-Cd-, Ni-Metallhydrid- oder Ni-H$_2$-Batterie ist.

**10.** Alkalibatterie nach Anspruch 1, wobei die polymeren Fasern des Weiteren mit Tensid beschichtet sind.

**Revendications**

**1.** Pile alcaline ayant un séparateur comprenant une couche poreuse de fibres fines de fibres polymères mouillables ayant un diamètre moyen situé dans la plage de 50 nm à 3000 nm et pouvant être obtenu par électrofilage ou électrosoufflage d'une solution de filage de polymère et de tensioactif, dans laquelle le tensioactif est un tensioactif non ionique, dans laquelle la couche poreuse de fibres fines se mouille de manière permanente avec des électrolytes alcalins forts, dans laquelle le tensioactif non ionique est choisi parmi le groupe constitué d'un tensioactif de polyéther alkylé et d'un tensioactif de polyéther de siloxyle, dans laquelle les fibres comprennent un polymère choisi parmi le groupe constitué du polyamide aliphatique, du polyamide semi-aromatique, du poly(alcool de vinyle), de la cellulose, du poly(téréphtalate d'éthylène), du poly(téréphtalate de propylène), du poly(téréphtalate de butylène), de la polysulfone, du poly(fluorure de vinylidène), du poly(fluorure de vinylidène)-hexafluoropropène, du polyacrylonitrile, du polypropylène, du polyéthylène, du poly(méthacrylate de méthyle), du polyméthyl pentane, du poly(sulfure de phénylène), du polyacétyle, du polyuréthane, du polyamide aromatique et de leurs mélanges, de leurs mixtures et de leurs copolymères, et dans laquelle le tensioactif non ionique est présent en une teneur de 0,4 % à 20 % en poids du polymère.

**2.** Pile selon la revendication 1, dans laquelle le tensioactif est présent en une teneur de 1 % à 5 % en poids du polymère.

**3.** Pile selon la revendication 1, dans laquelle la couche poreuse de fibres fines présente une taille moyenne de pore d'écoulement comprise entre 0,01 $\mu$m et 15 $\mu$m.

**4.** Pile selon la revendication 1, dans laquelle la couche poreuse de fibres fines a une épaisseur comprise entre 0,1 mil (0,0025 mm) et 12 mil (0,3 mm).

**5.** Pile selon la revendication 1, dans laquelle la couche poreuse de fibres fines a un poids de base compris entre 1 g/m$^2$ et 90 g/m$^2$.

**6.** Pile selon la revendication 1, dans laquelle les fibres ont un diamètre moyen compris entre 50 nm et 1000 nm.

**7.** Pile selon la revendication 1, dans laquelle le polymère est réticulé.

**8.** Pile selon la revendication 1, dans laquelle le séparateur comprend de multiples couches poreuses de fibres fines, ou dans laquelle le séparateur comprend de multiples couches poreuses de fibres fines comprenant des polymères différents, ou le séparateur comprend de multiples couches poreuses de fibres fines ayant des caractéristiques différentes sélectionnées dans la liste constituée de l'épaisseur, du poids de base, de la taille de pore, de la taille des fibres, de la porosité, de la perméabilité à l'air, de la résistance ionique et de la résistance à la traction.

9. Pile alcaline selon la revendication 1, dans laquelle la pile alcaline est une pile primaire Zn-MnO$_2$, secondaire Zn-MnO$_2$ Zn-air, Zn-AgO, Ni-Zn, Cd-AgO, Zn-HgO, Cd-HgO, Ni-Cd, Ni-hydrure métallique, ou Ni-H$_2$.

10. Pile alcaline selon la revendication 1, dans laquelle les fibres polymères sont en outre revêtues d'un tensioactif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9900447 A
- US 7112389 B
- WO 2003080905 A
- US 10822325 B
- US 20040060268 A1
- WO 03080905 A